Europäisches Patentamt

(19) European Patent Office (11) Publication number: **0 012 242**

Office européen des brevets **B1**

(12) **EUROPEAN PATENT SPECIFICATION**

(45) Date of publication of patent specification: **18.05.83** (51) Int. Cl.³: **G 06 F 3/04,** G 06 F 7/00,
G 06 F 13/00

(21) Application number: **79104585.9**

(22) Date of filing: **19.11.79**

(54) Digital data processor for word and character oriented processing.

(30) Priority: **15.12.78 US 970082**

(43) Date of publication of application:
**25.06.80 Bulletin 80/13**

(45) Publication of the grant of the patent:
**18.05.83 Bulletin 83/20**

(84) Designated Contracting States:
**BE CH DE FR GB IT NL SE**

(56) References cited:
**US - A - 4 071 889**
**US - A - 4 075 686**
**US - A - 4 124 888**

**PRODUCT INFORMATION about the "Rechner**
**IBM 3032", IBM DEUTSCHLAND GMBH,**
**Stuttgart, September 1977**

(73) Proprietor: **International Business Machines**
**Corporation**
**Armonk, N.Y. 10504 (US)**

(72) Inventor: **Machol, Guenther Keith**
**13597 Ronnie Way**
**Saratoga, California 95070 (US)**

(74) Representative: **Killgren, Neil Arthur**
**IBM United Kingdom Patent Operations Hursley**
**Park**
**Winchester, Hampshire, SO21 2JN (GB)**

Courier Press, Leamington Spa, England.

**0 012 242**

Digital data processor for word and character oriented processing

This invention relates to a digital data processor for word and character oriented processing, for use, for example in the control of data transfer between data handling units in a data processing system.

The development of the so-called microcomputer containing a microprocessor, an instruction store, a random access storage and input/output device controllers on one monolithic integrated chip has led to the widespread use of these devices in such applications. Because the microcomputer is built on a single chip, the capacity of the instruction store is necessarily small and it is desirable that this limited capacity is used efficiently. In applications such as that mentioned microcomputer functions span both data handling and input/output (I/O) control. Full words in memory or registers are required for data handling, while single characters, in the form of single bits of memory or register space are frequently used for device control and it is customary in prior art systems to employ a word oriented processor and to handle single bit operations by performing a word fetch and then bit insertion into the fetched word. In many applications this does not make optimum use of instruction storage capacity.

The invention is then directed to a digital data processor formed on a single monolithic integrated chip which will handle word oriented processes and character oriented processes with improved efficiency of hardware utilization.

According to the invention a digital data processor for word and character oriented processing formed on a single monolithic integrated chip comprises a first arithmetic and logical unit for operating on multiple character words, an accumulator for storing the output of said first arithmetic and logic unit, a second arithmetic and logical unit for operating on single characteri words, storage means for storing multiple character data words, and addressing means for gating data words from a common portion of said storage means selectively to said first unit in a multiple character mode and to said second unit in a single character mode.

By so separating the processing of single and multiple character operations considerable scope is provided for optimising the use of instruction storage.

In a preferred embodiment of the invention, for handling multi-bit words and single bit words instruction execution circuits are provided to sequentially execute instructions selectively by the first and second arithmetic and logic units in response to either word or bit mode instructions.

An example will be described of the use of the processor of the invention using both bit and word mode instructions in an intermixed fashion in recovery of double frequency encoded data. For this use there is provided a binary counter having at least one portion addressable on a single bit basis and a second portion addressable on a multiple bit word basis. The portion addressable on a single bit basis is used to enable a pseudo-interrupt capability for the system and the portion addressable on a multiple bit basis permits counting a window value for the double frequency encoded data separation operation.

The preferred embodiment of the invention referred to above will now be described by way of example with reference to the accompanying drawings, in which:—

Fig. 1 is a schematic data-flow diagram of the embodiment, which is a single-chip microcomputer in which form the invention is particularly advantageous.

Fig. 2 is a diagram showing the address space for the microcomputer of Fig. 1;

Fig. 3 is a timing diagram which illustrates the relative timings of the signals to control the microcomputer components;

Fig. 4 is a diagram showing the general instruction format of the short instructions for the microcomputer of Fig. 1;

Fig. 5 is a diagram showing the instruction format of the long instructions for the microcomputer of Fig. 1;

Fig. 6 is a diagram showing the steps performed to recover variable velocity f/2f recorded data using the microcomputer of Fig. 1;

Fig. 7 is a flow chart which defines the steps taken to execute the f/2f data recovery operation using the microcomputer of Fig. 1;

Fig. 8 is a schematic illustration of the f/2f binary counter;

Fig. 9 is a schematic illustration of the op decode means;

Fig. 10 is a schematic illustration of the ALU gating means.

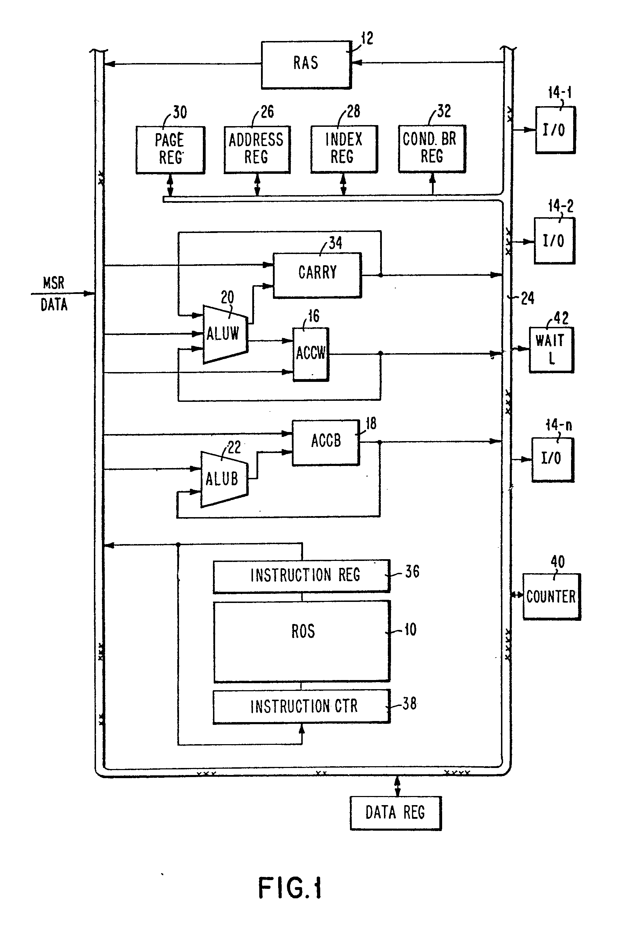

The microcomputer to be described is designed to be used to control the flow of data in a communication loop. The details of the interaction between the microcomputer and the communication loop are however not disclosed, since they are not necessary to an understanding of the invention. Referring to Figure 1 the microcomputer includes read only storage (ROS) means 10, and random access storage means (RAS) 12. The ROS 10 contains 1,024 instruction words each of twelve bits and is used to store the program which operates the system. The RAS 12 contains 128 read-write storage cells of four bits each for working storage and data buffering. Two groups of instructions are provided. Bit mode instructions operate on a single bit of data, while word mode instructions operate on a data word (four bits in the specific embodiment shown). The microcomputer utilizes two accumulators and two arithmetic and logic units (ALU). One accumulator 16 and ALU 20 are used for executing word

2

instructions and the second accumulator 18 and second ALU 22 are utilized for executing bit instructions. Space is provided on the chip for specialized I/O interface adapters 14-1 through 14-N and communication between these interfaces and the microcomputer is provided by system bus 24. Each of the outputs is latched and available to the processor as a destination. Several signals are presented as inputs to system bus 24. Each of these input signals is available to the processor as a source.

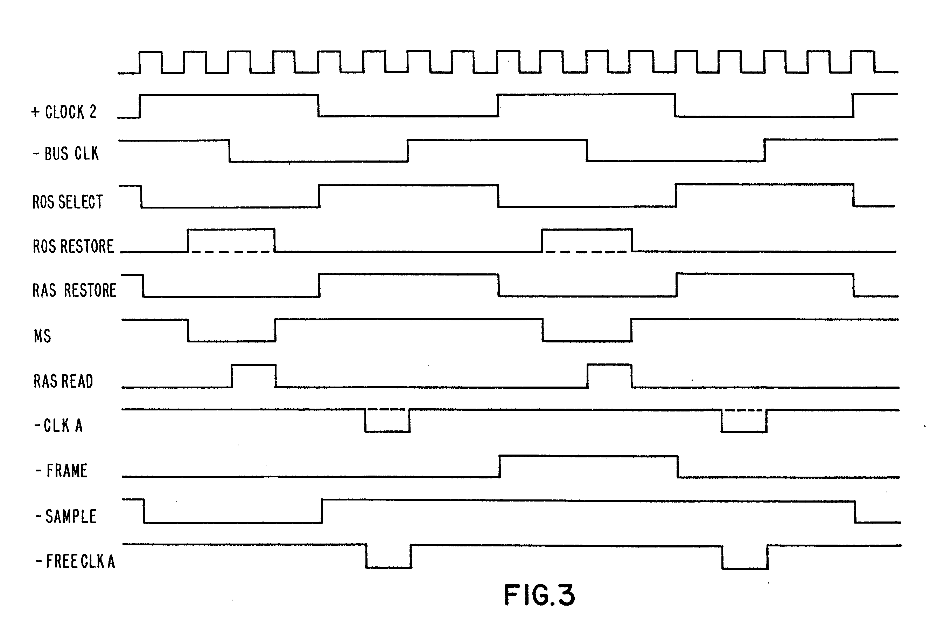

Basic clock control of the microcomputer is supplied by a clock chip (not shown). These clock signals (see Fig. 3) comprise +CLOCK 2, which is used to increment the instruction counter 38. One instruction is executed for each +CLOCK 2 cycle. The signals MS, RAS READ, and RAS RESTORE provide the signals needed to continuously operate the RAS 12 on the chip, whereas the signals ROS SELECT and ROS RESTORE provide the signals needed to operate the ROS 10 on the chip. —FREE CLK A and —BUS CLK signals are used to generate the —CLK A signal and to gate data onto the bus 24 respectively. —FREE CLK A is also used to clock latches used while in the wait state.

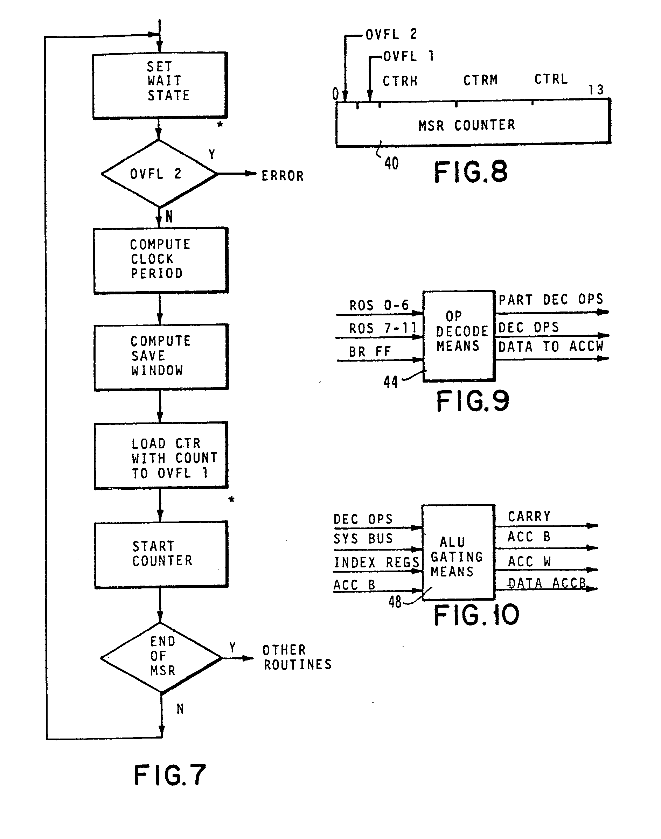

The ROS timing signals control the addressing of the program instructions specified by the address in instruction counter 38, and the operation to be performed is decoded by op decode means 44 (Fig. 9). Op decode means 44 includes logic circuits for decoding the op code and controls to execute the instruction. Conductor means are provided to transfer data and control signals from op decode means 44 to RAS 12 and a plurality of internal registers including index register 28, page register 30, address register 36 and conditional branch register 32.

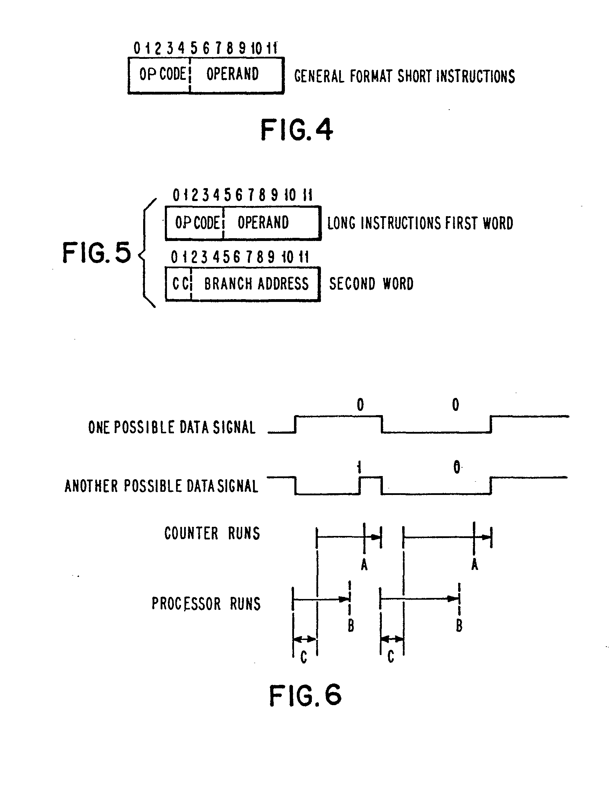

The instructions for the microcomputer are of two types. Those which reference or operate on a word (four bits) of information, and those which reference or operate on a single bit. The operation code determines whether an instruction is of the word or bit type. There are two instruction formats used with the microcomputer: A short instruction is one ROS word (twelve bits) and normally executes in one instruction cycle. A long instruction is two ROS words and normally executes in two cycles. The general instruction format is shown in Figure 4 for short instructions and Figure 5 for long instructions. In the short instructions, the high order bits 0 through 4 define the operation code and bits 5 through 11 comprise the operand field. The operand field may designate a source, a destination, or modifiers. The long instructions are two ROS words long and the first word has the same format as the short instruction. When the first word is decoded, a branch flip-flop (not shown) is set to indicate that the next word is the second of the branch instruction words. The second word (see Figure 5) utilizes bits 0 and 1 to form a branch condition code which will be specified in greater detail later. Bits 2 through 11 define the branch address. After the second word is processed, the branch flip-flop is reset. In word mode instructions, either the word accumulator 16 or the address register 26 is the implied source or destination. This group of instructions comprises four move operations, three register operations, four logical operations, two arithmetic operations, three branch operations, and one input/output instruction. In bit mode instructions, the bit accumulator 18 is the implied source or destination. This group of instructions comprises two move operations, three logical operations, two set operations, and two branch operations.

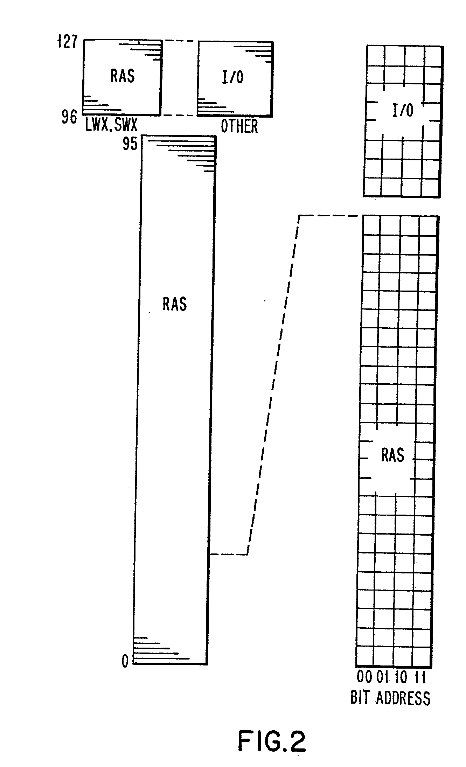

The address space for the microcomputer is shown in Figure 2. The address space includes, in addition to RAS 12, the various registers, latches and certain I/O lines. Direct addressing is used for both bit and word mode instructions. In addition, certain word and bit operations may be indexed. The space for word mode instructions permits 128 words to be addressed. Addresses 0 to 95 are those of RAS 12 words, while addresses 96 to 127 depend upon the instruction type. If the instruction is a LOAD WORD INDEXED or STORE WORD INDEXED, addresses 96 to 127 refer to the words in RAS 12. For all other word mode instructions, addresses 96 to 127 refer to the word I/O and register space.

The address space for bit mode instructions provides for 128 sources and destinations. Addresses 0 to 95 are those of single RAS 12 bits, while addresses 96 to 127 are reserved for single bit register or chip I/O pin. The low order 24 words of the RAS 12 (addresses 0 to 23) are used to provide the RAS bit address space. If either or both of the first two bits in the operand field are 0, a RAS 12 bit is selected. The actual RAS word address consists of two zeros followed by the first five bits of the operand field, while the bit position within the word is specificed by the remaining two bits of the operand field as shown in Fig. 2. If, on the other hand, the first two bits of the operand field are both 1, then a register or chip I/O pin is selected. Unless the operand field specifies the indexed accumulator ACCX, the field is taken directly as the address of the bit. If the indexed accumulator is specified, the actual source/destination used is that bit of the word accumulator selected by the low order two bits of the index register 28. Thus, indexed addressing may be used to select any of the bits ACCW0, ACCW1, ACCW2, or ACCW3 of word accumulator 16.

Fig. 4 shows the format of all instructions except for branch instructions, the format for which is shown in Fig. 5. In the LOAD WORD INSTRUCTION (LDW), the addressed word is loaded into the word accumulator 16.

In LOAD WORD INDEXED (LWX), the indexed mode of word addressing is used. The addressed RAS 12 word is loaded into the word accumulator 16. In this instruction, if bit P (Bit 5) of the operand field is 1, the page register 30 is used to form the high order three bits of the word address; otherwise bits 6, 7, and 8 of the operand field are used. If I (bit 10) is 1, the address register 26 is incremented after the word address is formed. If L (bit 9) is 1, the page register 30 and address register 26 are linked to form a seven bit counter when the address register is incremented, with the page register forming

**0 012 242**

the high order three bits; otherwise, the page register is unaffected when the address register is incremented.

STORE WORD (STW). The contents of the word accumulator are stored at the specified address.

STORE WORD INDEXED (SWX). The indexed mode of word addressing, as previously described, is used. The contents of word accumulator 16 are stored at the specified RAS 12 address.

LOAD ADDRESS REGISTER (LAR). The addressed word is loaded into address register 26.

STORE ADDRESS REGISTER (SAR). The contents of address register 26 are stored at the specified address.

LOAD REGISTER IMMEDIATE (LRI). The contents of the immediate field are loaded into the register specified by instruction bits 5 through 7. The conditional branch register CB REG 32 may also be modified as shown below.

| Instruction bit | | | Register | CBREG |
| 5 | 6 | 7 | specified | action |
|---|---|---|---|---|
| 0 | 0 | 0 | XR | Reset |
| 0 | 0 | 1 | XR | Set |
| 0 | 1 | — | AR | — |
| 1 | 0 | — | ACCW | — |
| 1 | 1 | — | PR | — |

AND WORD (ANW). The contents of the word accumulator 16 are ANDed with the addressed word. The result is stored in word accumulator 16.

OR WORD (ORW). The contents of word accumulator 16 are ORed with the addressed word. The result is stored in word accumulator 16.

EXCLUSIVE OR WORD (EOW). The contents of word accumulator 16 are EXCLUSIVE-ORed with the addressed word. The result is stored in word accumulator 16.

ADD WORD (ADD). The binary sum of word accumulator 16, the addressed word and the CARRY latch 34 is stored in the accumulator 16. CARRY latch 34 is set if there was a carry out from the most significant bit of the result; otherwise, it is reset.

SHIFT OR ADD IMMEDIATE (SAI). If A (bit 5 of the operand field) is 1, this instruction operates as an ADD IMMEDIATE instruction. In this case, the binary sum of the word accumulator 16, the immediate field (bits 8 through 11 of the operand field) and the CARRY latch 34 is stored in accumulator 16. CARRY is set if there was a carry from the most significant bit of the result; otherwise, it is reset. If A equals 0, this instruction operates as a SHIFT instruction. In this case, if R (bit 7 of the operand field) is 1, the contents of word accumulator 16 is shifted one bit to the right and if R equals 0, then the contents of the accumulator is shifted to the left. If C (bit 6 of the operand field) is 1, the contents of CARRY latch 34 is shifted into accumulator 16. If C is 0, a zero is shifted into accumulator 16. The bit shifted out of accumulator 16 is shifted into CARRY latch 34.

PROGRAMMED I/O (PIO). This instruction permits word data transfer between the CPU and an external device. The instruction has four modes: READ, WRITE, READ INDEXED, and WRITE INDEXED. When this instruction is loaded into instruction register 36, the low order six bits are made available externally on six output lines for user-defined control purposes. The PIO output line also becomes active, indicating that a PIO operation is in progress. The PIO modes, READ, WRITE, and WRITE INDEXED are executed in one cycle, while the READ INDEXED mode requires a minimum of two cycles to execute. In the READ mode, the word present on the READ DATA lines, when DATA VALID is active, is gated into word accumulator 16. During the WRITE mode, the contents of word accumulator 16 are gated out on the WRITE DATA lines for the duration of time that the PIO instruction is being executed. In the READ INDEXED mode, the word present on the READ DATA lines when DATA VALID is active, is stored in the RAS 12 at the location determined by INDEXED mode addressing, using the contents of the page register 30 and address register 36, as a pair. The pair of registers used as a seven stage counter is then incremented. In the WRITE INDEXED mode, the contents of RAS 12 at the location determined by the INDEXED mode addressing is gated out on the WRITE DATA lines for the duration of the execution of the PIO instruction. The page register 30 and address register 36, regarded as a seven stage counter, are then incremented.

COMPARE AND BRANCH (CB). The contents of the word accumulator 16 are compared with the addressed word. The branch condition is specified by bits 0 and 1 of the second word, according to the following conditions:

| Instr. bit | | Action |
| 0 | 1 | |
|---|---|---|
| 0 | 0 | No branch. |
| 0 | 1 | Branch if equal. |
| 1 | 0 | Branch if not equal. |
| 1 | 1 | Unconditional branch. |

4

COMPARE IMMEDIATE AND BRANCH (CIB). The contents of word accumulator 16 are compared with the immediate field. The branch condition is specified by bits 0 and 1 of the second word as specified above.

CONDITIONAL BRANCH (CBR). When the conditional branch register 32 is 0, a branch to the branch address will always occur. When conditional branch register 32 is 1, the contents of index register 28 is first tested. If the contents of the index register is 0, no branch occurs and the conditional branch register 32 is reset. If the contents of the index register is not 0, the branch to the specified address occurs and the contents of the index register 28 is decremented.

LOAD BIT (LDB). The addressed bit is loaded into the bit accumulator 18.

STORE BIT (STB). The content of the bit accumulator 18 is stored at the addressed location.

SET BIT (SET). The addressed location is set to 1.

RESET BIT (RST). The addressed location is reset to zero.

AND BIT (ANB). The content of the bit accumulator 18 is ANDed with the addressed bit. The result is stored in the bit accumulator 18.

OR BIT (ORB). The content of the bit accumulator 18 is ORed with the addressed bit. The result is stored in bit accumulator 18.

EXCLUSIVE-OR BIT (EOB). The content of the bit accumulator 18 is EXCLUSIVE-ORed with the addressed bit. The result is stored in the bit accumulator 18.

LOAD AND BRANCH (LB). The addressed bit is loaded into the bit accumulator 18. Branching depends upon the bit loaded into the accumulator and the branch condition defined by bits 0 and 1 of the second word of the instruction.

| Instr. bits | | |
|---|---|---|
| 0 | 1 | Action |
| 0 | 0 | No branch. |
| 0 | 1 | Branch if bit loaded is one. |
| 1 | 0 | Branch if bit loaded is zero. |
| 1 | 1 | Unconditional branch. |

OR AND BRANCH (OB). The addressed bit is ORed with the contents of the bit accumulator 18. The result is stored in bit accumulator 18. Branching depends upon the resultant bit and branch condition, defined by bits 0 and 1 of the second word of the instruction as given above.

Op decode means 44 provides decoded op signals to the ALU 20 and the device interfaces 14. The op code field (ROS 0 through ROS 4) and the two high order bits of the operand field (ROS 5 and ROS 6) of the instruction are decoded into the four basic classes of word source ops, word destination op, bit source ops and bit destinations ops. In response to this level of decode, the signals W D OP, W S OP, B D OP, and B S OP are produced. These signals are shown in Fig. 9 as PART DEC OPS and these signals are sent to system bus 24. The remaining 5 bits (ROS 7 through ROS 11) of the operand field of the instruction are used to produce five address signals SD ADDR 1, SD ADDR 2, SD ADDR 3, SD ADDR 4 and SD ADDR 5. The op decode signals, the source/destination (SD) addressing signals and the system clocks are all that is required by a device interface 14 for op execution. Data is passed between the microprocessor and the device interfaces 14 by means of a four-bit bidirectional system bus 24. The bus signals are BUS 0, BUS 1, BUS 2 and BUS 3. —CLK A, —FREE CLK A and —BUS CLK are system clocks used by various device interfaces 14—where CLK A and —FREE CLK A are used to load destination latches and registers and —BUS CLK is used to gate data from the device interface logic to the bus 24.

Op decoder means 44 produces a plurality of control signals in response to the bit pattern assigned to represent the instructions. In the embodiment shown the op code field is 5 bits so 32 instructions can be uniquely identified with this field. In the embodiment described 16 word instructions and 9 bit instructions are used. For each of these instructions gates are provided in op decode means 44 to produce an instruction control signal for each of the implemented instructions responsive to the assigned bits for each of the op codes. This logic circuitry is not shown in detail since the op code bit assignment is a matter of design choice and op decoding circuitry is well known. These signals are shown in Fig. 9 as DEC OPS.

The addressing means comprises instruction counter 38, instruction register 36, three indexing registers comprising page register 30, address register 26 and index register 28 and a conditional branch register 32. The general operation of the addressing means was previously described in conjunction with Figure 2. At this time it was noted that the space for word mode instructions permits 128 words to be addressed. The addresses for the source or destination is provided by bits 5—11 of the instruction which comprise the operand field as shown in Figures 4 and 5. For word mode instructions, addresses 0 to 95 are those of RAD 12 words while addresses 96 to 127 depend upon the instruction type. The bit assignments for sources and destinations can be assigned in any suitable manner.

The address space for the bit mode instructions provides for 128 sources and destinations and the addressing mode for these instructions was described above.

The address register 26 is a four stage binary counter. It is used to form the low order four bits of the word address for LWX and SWX instructions. This register is incremented if bit 10 of the instructions is a one. Address register 26 is the implied source of an SAR instruction and the implied destination of an LAR instruction. It may be loaded by an LRI instruction and is also a valid source or destination for other word instructions.

The index register 28 is a four stage down counter used for program control and bit indexing of word accumulator 16. Index register 28 may be loaded with an LRI instruction and is also a valid source or destination for other word instructions.

Instruction counter 38 is a 10 stage shift register and this counter sequences through 1023 states in the order that the instructions have been placed in ROS 10. When a branch instruction is executed, however, the branch address is loaded into the instruction counter 38.

The instruction register 36 is a 12 stage register which, at each machine cycle, contains either the instruction or, in the case of the second word of a two word branch instruction, the branch condition and branch address.

The page register 30 is a three stage binary counter. Page register 30 is used to form the high order three bits of the word address in LWX, SWX instructions if bit 5 of the instruction is one. If bits 10 and 11 of the instruction are all ones, page register 30 and address register 36 are linked to form a seven bit counter when the address register 36 is incremented, with page register 30 forming the high order three bits. When page register 30 is loaded, only the low order three bits of the source word are used. When using page register 30 as a word source, the contents of the register will appear as the low order three bits and the most significant bit will be zero. Page register 30 may be loaded using an LRI instruction, and is also a valid source or destination for other word instructions.

The arithmetic and logic (ALU) means comprises a word ALU 20 with an associated carry bit storage means 34 and a bit ALU 22. Associated with the bit and word ALUs are the bit accumulator means 18 and word accumulator means 16. Also included is ALU gating means 48 (see Fig. 10) to gate data into and out of these components in response to the decoded op signals from op decoder means 44. Word ALU 20 is a four bit ALU with carry which performs the functions of ADD, AND, OR, EXCLUSIVE OR, LOAD and SHIFT and places the result in word accumulator 16 and carry latch 34, when appropriate. Word ALU 20 performs the STORE operation by gating the contents of the word accumulator 16 to system bus 24 and by loading word accumulator 16 when specified as the word destination. Word ALU performs the PIO function by gating the contents of word accumulator 16 to the system bus 24 for a write operation and by loading word accumulator 16 from the system bus for a read operation.

The individual bits of word accumulator 16 are also affected by SET, RESET and STORE instructions when they are specified as bit destinations.

Gating means are provided to gate the contents of word accumulator 16, address register 26, page register 30, and the immediate field (ROS 8 through ROS 11) to the system bus when one of them is specified as a word source. Gating means are also provided to gate the individual word accumulator bits, carry and bit accumulator 18 to the bus 24 when specified as a bit source.

Gating means is provided to gate the contents of word accumulator 16, address register 26, index register 28, page register 30, ones (word source), 0/one (bit source), and bit accumulator 18 to the system bus 24 when one of them is addressed as an implicit source for destination ops (STW, SAR, SET, RST and STB). Gating means are also provided to gate the contents of word accumulator 16, to system bus 24 for the SWX and PIO write ops and gates the external input lines to system bus for the RDX and PIO read ops.

Word accumulator 16 is a four bit register which is the implied source for most word mode destination instructions and is the implied destination for most word mode source instructions. Word accumulator 16 may also be the specified destination of an LRI instruction. Each bit of the word accumulator is directly addressable as a bit source or destination (ACCW0, ACCW1, ACCW2, ACCW3). These signals are shown collectively as ACC W in Fig. 10. Word accumulator 16 is also indexable as a bit source or destination. When ACCX is addressed in a bit mode instruction, the bit of word accumulator 16 actually selected is that specified by the low order two bits of the index register 28. ACCW0, (most significant bit) 1, 2, or 3 is selected when the low order two bits of index register 28 are 00, 01, 10, or 11, respectively.

The single bit accumulator 18 is the implied source of all bit mode destination operations except SET and RST. It is the implied destination of all bit mode source operations.

One example of an application which makes use of both word and bit mode instructions is in the recovery of variable velocity two frequency "bar coded' or transition recorded data using a microcomputer. This data is recorded as a series of transitions in a serial stream, and the transitions occurs at a frequency f or at double that frequency 2f. As shown in Fig. 6, a binary one may be recorded as one transition within a given period of time T corresponding to one cycle at frequency f. A binary zero may be recorded as no transition over a similar time interval T. In either case clock transitions occur at both ends of the interval.

6

This data may be generated by sensing data from an indicia bearing media such as a magnetic striped card, for example. The data may also be generated by a hand held sensor optically scanning bar coded data. Recovery of the f/2f data is complicated by variations from the ideal signals due to variable velocity scan, frequency variations in transmitted data, distorted reception, non-uniform bar widths and miscellaneous other factors which cause variation in the spacings of transition signals in the recorded data.

Various methods and apparatus have been developed to decode this f/2f data such as that described in U.S. Patent 3,696,613 to Vinal, for example. The Vinal patent may be referred to for a more detailed discussion of a system for processing f/2f data.

To use a microcomputer to recover variable f/2f recorded data at rates faster than the microcode alone can handle, it is necessary to provide additional interface logic. Since the microprocessor generally has to perform other functions as well, space for logic circuits and for microinstructions to implement any one function is at a premium so the additional logic circuits should be held to a minimum number.

To more efficiently perform this data recovery operation the microcomputer is provided with a controllable counter 40 and a plurality of latches to control the counter and to capture data being read from a magnetic card by a Magnetic Stripe Reader (MSR). The microcomputer performs the data recovery by presetting counter 40 according to a calculated value derived from the clock period T and then going into a wait state (a pseudo-interrupt since the microcomputer does not have interrupt capability) until the next expected data transition occurs. At that time processing is resumed with the next f/2f decoded data bit automatically latched. The microcomputer assembles the data bits into words and, after checking parity, stores them for later use. The latest clock period T is also recomputed.

Controllable counter 40 (see Figs. 1 and 8) according to a specific embodiment comprises a 14 stage binary up-counter. The most significant bit OVFL2 and the next most significant bit OVFL1 are bit sources and destinations. The remaining 12 bits are divided into three four bit word sources/destinations; CTRH, CTRM and CTRL.

Fig. 6 is a timing diagram of the steps taken to recover the f/2f data, whilst Figure 7 is a flow chart of the process. A reference or window time (WINDOW), which is an appropriate fraction of the last clock period T, (3/4T in the specific embodiment) is computed and stored in the local store, and the corresponding count is loaded into the counter. Referring to Figure 7, the MSR routine is entered with the microcomputer in the wait state nad the counter being incremented on the positive edge of the —FREE CLK A signal so that it will overflow (and produce the signal OVFL 1) at the reference time A (Fig. 6). When the counter overflows the pseudo-interrupt is enabled by allowing the next transition to reset the WAIT latch 42. In the case that no further transition occurs the counter continues to increment and processing is resumed when the OVFL 2 signal is generated. Both word and bit instructions are utilized in the operation and the instruction counter 38 controls the sequential execution of these instructions.

When a transition occurs, processing of microinstructions resumes but the counter stops running. The value in the counter (TRANS) is the time in cycles from the first overflow to the transition. The latest clock period (CLOCK) is then computed as CLOCK=WINDOW+TRANS. The reference or window time is recomputed as WINDOW=3/4×CLOCK and stored. The elapsed time in cycles from the transition to the instant at which the counter is to be restarted, denoted in Fig. 6 by interval C, is subtracted from the computed WINDOW and the complement of the result is loaded into the counter. The counter is then restarted and other microinstructions may now be executed provided that their execution is completed and the computer returned to the WAIT state at time B (Fig. 6) before the first overflow occurs.

At each resumption of processing, the current signal level is automatically saved in a latch. Another latch is controlled to contain a ONE if the current signal level and the previously saved level are the same; otherwise, latch two contains a zero. This latch then holds the f/2f data determined by the algorithm described above.

## Claims

1. A digital data processor for word and character oriented processing formed on a single monolithic integrated chip, comprising a first arithmetic and logical unit (20) for operating on multiple character words, an accumulator (16) for storing the output of said first arithmetic and logic unit, a second arithmetic and logical unit (22) for operating on single character words, storage means (12) for storing multiple character data words, and addressing means (38, 36, 30, 26, 28, 32) for gating data words from a common portion of said storage means selectively to said first unit in a multiple character mode and to said second unit in a single character mode.

2. A processor as claimed in Claim 1 further characterised in that said addressing means is adapted to gate single characters from said accumulator means to said second unit.

3. A processor as claimed in Claim 1 or Claim 2 further characterised by instruction execution sequencing means (38) for controlling sequential execution of a plurality of instructions selectively by said first and second units.

4. A process as claimed in any preceding claim further characterised in that said storage means comprises random access storage and said addressing means provides selective accessing of a multiple character data word or a single character from a common portion of said storage.

5. A digital data processor as claimed in any preceding claim for controlling the transfer of data in a data transmission system employing characters in the form of binary digits (bits), characterised by a binary counter (40) including a plurality of bit positions, at least one portion of said counter being addressable on a single bit word basis, and at least a second portion being addressable on a multiple bit word basis, whereby said first portion enables a pseudo interrupt and said second portion is adaptable to counting a window value for double frequency encoded data separation.

**Patentansprüche**

1. Digitaler Datenprozessor für eine wort- und zeichenorientierte Verarbeitung, der auf einem einzigen monolithischen integrierten Chip aufgebaut ist und folgende Komponenten aufweist: eine erste arithmetische und logische Einheit (20) für die Bearbeitung von Mehrzeichenwörtern, einen Akkumulator (16) für die Speicherung der Ausgangswerte der genannten ersten arithmetischen und logischen Einheit, eine zweite arithmetische und logische Einheit (22) für die Bearbeitung von Einzelzeichenwörtern, einen Speicher (12) für die Speicherung von Mehrzeichen-Datenwörtern und Adressierschaltungen (38, 36, 30, 26, 28, 32) für die selektive Durch schaltung von Datenwörtern aus einem gemeinsamen Abschnitt des genannten Speichers zur genannten ersten arithmetischen und logischen Einheit in einer Mehrzeichen-Betriebsart und zur zweiten arithmetischen und logischen Einheit in einer Einzelzeichen-Betriebsart.

2. Digitaler Datenprozessor nach Anspruch 1, weiterhin dadurch gekennzeichnet, daß die genannten Adressierschaltungen für eine Durchschaltung einzelner Zeichen von dem genannten Akkumulator zu der genannten zweiten arithmetischen und logischen Einheit angepaßt sind.

3. Digitaler Datenprozessor nach Anspruch 1 oder 2, weiterhin gekennzeichnet durch eine Instruktionsausführungs-Folgesteuerung (38) für die Steuerung der Sequentiellen und selektiven Ausführung von Instruktionen durch die genannte erste und zweite arithmetische und logische Einheit.

4. Digitaler Datenprozessor nach einem der vorhergehenden Ansprüche, ferner dadurch gekennzeichnet, daß der genannte Speicher einen Speicher mit wahlfreiem Zugriff aufweist und die genannten Adressierschaltungen einen selektiven Zugriff zu einem Mehrzeichen-Datenwort oder einem Einzelzeichen von einem gemeinsamen Abschnitt des genannten Speichers vorsehen.

5. Digitaler Datenprozessor nach einem der vorhergehenden Ansprüche für die Steuerung der Datenübertragung in einem Datenübertragungssystem, das Zeichen in der Form binärer Digits (Bits) verwendet, gekennzeichnet, durch einen Binärzähler (40) mit mehreren Bitpositionen und mindestens einem Abschnitt des genannten Zählers, der auf Einzelwortbasis adressierbar ist und mit mindestens einem zweiten Abschnitt, der auf Mehrbitwortbasis adressierbar ist, wobei der genannte erste Abschnitt eine Pseudounterbrechung ermöglicht und der genannte zweite Abschnitt für die Zählung eines Feinsterwertes für doppelfrequenzcodierte Datentrennung angepaßt ist.

**Revendications**

1. Processeur de données digitales destiné notamment au traitement de mots et de caractères, formé sur une unique microplaquette intégrée monolithique et comportant une première unité arithmétique et logique (20) permettant de traiter des mots de plusieurs caractères, un accumulateur (16) pour emmagasiner la sortie de ladite première unité arithmétique et logique, une seconde unité arithmétique et logique (22) permettant de traiter les mots composés d'un seul caractère, une mémoire (12) permettant d'emmagasiner les mots de données à plusieurs caractères, et des moyens d'adressage (38, 36, 30, 26, 28, 32) pour transférer de façon sélective les mots de données d'un partie commune de ladite mémoire à ladite première unité dans un mode dit à plusieurs caractères et à ladite seconde unité dans un mode dit à un seul caractère.

2. Processeur selon la revendication 1, caractérisé en outre en ce que lesdits moyens d'adressage permettent de transférer des caractères individuels à ladite seconde unité depuis ledit accumulateur.

3. Processeur selon la revendication 1 ou 2, caractérisé en outre en ce qu'il comprend des moyens (38) permettant de commander de façon sélective l'exécution séquentielle de plusieurs instructions par lesdites première et seconde unités.

4. Processeur selon l'une quelconque des revendications précédentes, caractérisé en outre en ce que ladite mémoire se compose d'une mémoire à accès sélectif et en ce que lesdits moyens d'adressage permettent d'accéder de façon sélective à un mot de données ä plusieurs caractères ou à un seul caractère depuis une partie commune de ladite mémoire.

5. Processeur de données numériques selon l'une quelconque des revendictions précédentes pour commander le transfert de données dans un système de transmission de données utilisant des caractères sous la forme de bits, caractérisé en ce qu'il comporte un compteur binarie (40) comprenant plusieurs positions de bit, une partie au moins dudit compteur pouvant être adressée ay moyen d'un mot à un seul bit, et une seconde partie au moins pouvant être adressée au moyen d'un mot à plusieurs bits, de telle sorte que ladite première partie rende possible une pseudo interruption et que ladite seconde partie permette de définir une valeur de fenêtre de temps aux fins de la séparation de données codées en double fréquence.

FIG.1

FIG.2

FIG.3

0 1 2 3 4 5 6 7 8 9 10 11

| OP CODE | OPERAND |

GENERAL FORMAT SHORT INSTRUCTIONS

# FIG. 4

FIG. 5

0 1 2 3 4 5 6 7 8 9 10 11

| OP CODE | OPERAND |

LONG INSTRUCTIONS FIRST WORD

0 1 2 3 4 5 6 7 8 9 10 11

| C C | BRANCH ADDRESS |

SECOND WORD

ONE POSSIBLE DATA SIGNAL

ANOTHER POSSIBLE DATA SIGNAL

COUNTER RUNS

PROCESSOR RUNS

# FIG. 6

4

FIG.7

SET
WAIT
STATE

OVFL 2 — Y → ERROR

N

COMPUTE
CLOCK
PERIOD

COMPUTE
SAVE
WINDOW

LOAD CTR
WITH COUNT
TO OVFL 1

START
COUNTER

END
OF
MSR — Y → OTHER
ROUTINES

N

OVFL 2
OVFL 1
CTRH    CTRM    CTRL
0                                              13
MSR COUNTER
40    FIG.8

ROS 0-6 →
ROS 7-11 → OP DECODE MEANS → PART DEC OPS
BR FF → → DEC OPS
44 → DATA TO ACCW
FIG.9

DEC OPS →
SYS BUS → ALU GATING MEANS → CARRY
INDEX REGS → → ACC B
ACC B → → ACC W
48 → DATA ACCB
FIG.10

5